# EUROPEAN PATENT APPLICATION

(11) **EP 4 641 447 A1**
(43) Date of publication of application: **29.10.2025**
(21) Application number: 25172045.4
(22) Date of filing: 23.04.2025
(51) Int. Cl.: G06N 3/0475, G06N 3/0895, G06N 3/088, G06N 5/04, G06F 16/242, G06F 16/2452

(54) **RETRIEVAL AUGMENTED GENERATION**

(30) Priority: 23.04.2024 GB 202405671
(71) Applicant: Vodafone Group Services Limited, Newbury RG14 2FN (GB)
(72) Inventor: MEY, Oliver, London, W2 6BY (GB); KUSA, Natalia, London, W2 6BY (GB); CHOPRA, Kunal, London, W2 6BY (GB)
(74) Representative: Boult Wade Tennant LLP

(57) **Abstract**

Methods and apparatus for generating a response to an input prompt are provided, in which a classifier is used to determine a retrieval process, from a plurality of retrieval processes, for use in generating a response to the input prompt. Methods and apparatus are also provided for training a classifier for determining a retrieval process, from a plurality of retrieval process and for generating a training dataset for training the classifier.

## Description

### TECHNICAL FIELD

The present disclosure relates to methods and apparatus related to retrieval augmented generation.

### BACKGROUND

In recent years, the field of generative Artificial Intelligence (AI) has experienced remarkable advancements, particularly with the development of language models such as large language models (LLMs). These sophisticated systems are capable of understanding and manipulating human language, enabling various applications in natural language processing, content generation, and problem-solving. LLMs, with their ability to comprehend complex linguistic structures and semantic relationships, represent a significant leap forward in the realm of AI, opening up avenues for innovation and creativity in numerous domains.

Language models such as LLMs are trained to provide natural language responses to user formulated prompts. Typically LLMs are trained based on a large and generalised training dataset. In a standalone application, the knowledge which an LLM is able to draw upon to generate responses is limited to the contents of the training dataset on which it was trained (this knowledge being baked into the parameters of the trained LLM). A standalone pre-trained LLM's knowledge base is therefore static and limited.

Recently, methods allowing a language model to draw upon additional data (which may include data which is kept up-to-date) have been employed. Such methods include Retrieval-Augmented Generation (RAG). RAG typically includes the augmentation of an LLM with a data retrieval process to provide the LLM with data relevant to a given input prompt. The LLM can then generate a response to the prompt using the retrieved relevant data. Such a process can provide an LLM with access to an up-to-date and/or domain specific knowledge base, thereby allowing an LLM to generate responses based on up to date and/or specific information.

It is in this context that the present disclosure has been devised

### SUMMARY

It has been realised that existing RAG processes suffer from limitations when implemented with data storage systems which have more complex data stores, data organisation and/or data access rights. For example, in the context of a large organisation (such as a company, public or government organisation) a large amount of different data may be stored across an organisation and it may be desirable to provide a single interface, such as a chat interface, to allow a user to query the stored data using natural language prompts and receive useful responses based on the stored data. In such a context, a RAG process may be utilised where a RAG algorithm is provided access to all of the data stored by an organisation as a single data source. However, in such a context there may be a number of complexities which existing RAG algorithms may not be able to handle.

For example, in some implementations it may be desirable to provide a RAG process with access to data drawn from a plurality of data sources, data domains and/or data categories. In the context of data stored by an organisation (such as a company, public or government organisation), an organisation may store different types of data relating to different departments or parts of the organisation, which may form different data domains or categories. However, it may not be clear from a given input prompt provided by a user, which data domain or category should be used to provide data to augment the response. This could lead to data being retrieved from a data domain or category which is unrelated to the input prompt and an inappropriate and/or unhelpful response to the input prompt may be generated.

Additionally or alternatively, in some implementations it may be desirable to provide a RAG process with access to data which is stored in a plurality of different formats and/or structures. For example, stored data may include unstructured data and/or structured data. Stored data may include text, tables, images, videos, data stored in a structured database and/or any other form of data. Different methods of retrieval may therefore be needed for retrieving different formats and/or structures which may not be handled by existing RAG processes.

Additionally or alternatively, it may be desirable to allow a RAG process to only draw upon a subset of a total data set in order to generate responses. For example, different users may have different permissions to access different data. It may therefore be desirable for a RAG process to only access data which a user providing a prompt has sufficient permissions to access.

Additionally or alternatively, some input prompts may not be best handled by retrieving data from a data store. For example, a data store may not include data relevant to generating a response to the input prompt and/or the input prompt may be handled satisfactorily using an LLM alone. In such a situation, no data retrieval need be performed and a response to the input prompt may be generated by an LLM alone. However, existing RAG processes may not easily discriminate between input prompts which will or will not benefit from retrieval augmentation.

As explained above, existing RAG processes may suffer from one or more limitations and/or disadvantages when applied to more complex retrieval scenarios. It has been realised that in some implementations, there may be a plurality of different retrieval processes which can be utilised to generate a response to an input prompt. It has further been realised that a process for generating a response to an input prompt may be improved, made more secure and/or made more efficient by determining, based on the input prompt, a retrieval process from the plurality of retrieval processes to use to generate a response to the input prompt. The determination may be made by a trained classifier for classifying a retrieval process to use to generate a response to a given input prompt. Methods and apparatus are described herein for generating a training dataset, for training a classifier using a training dataset, and for generating a response to a prompt using a trained classifier.

According to a first aspect of the disclosure there is provided a computer implemented method of generating a training dataset for training a classifier for determining a retrieval process from amongst a plurality of retrieval processes, the method comprising for each of the plurality of retrieval processes: determining a plurality of retrievals which can be made using the retrieval process; generating embeddings representative of each of the plurality of retrievals; and storing the embeddings representative of the plurality of retrievals and the retrieval process as entries in the training dataset.

The plurality of retrieval processes may comprise retrieving data from different data sources and/or may comprise using different data retrieval methods and processes to retrieve data. The plurality of retrieval processes may include one or more retrieval processes which comprise retrieving data from a data store. Different retrieval processes of the plurality of retrieval processes may comprise retrieving data from different data categories and/or data domains. For example, different retrieval processes of the plurality of retrieval processes may comprise retrieving data from data categories and/or data domains associated with different departments in an organisation and/or different topics.

Different retrieval processes of the plurality of retrieval processes may comprise retrieving data having different access rights and/or security permissions associated with them. For example, a first data retrieval process of the plurality of retrieval processes may comprise retrieving data from a data category and/or data domain to which a first group of users have permissions to access. A second data retrieval process of the plurality of retrieval processes may comprise retrieving data from a data category and/or data domain to which a second group of users have permissions to access. The first group of users and the second group of users may be different but may include one or more common members.

Different retrieval processes of the plurality of retrieval processes may comprise retrieving data using different data retrieval processes. For example, a first data retrieval process of the plurality of retrieval processes may comprise retrieving data from a data source storing unstructured data. The first data retrieval process may comprise searching the unstructured data and retrieving data from the unstructured data which is relevant to an input prompt. A second data retrieval process of the plurality of retrieval processes may comprise retrieving data from a structured data source (such as a database, e.g., a relational database). The second data retrieval process may comprise generating a query to the structured data source. For example, the second data retrieval process may comprise generating a query using a query language, such as the Structured Query Language (SQL), which is suitable for the structured data source to be queried.

Different retrieval processes of the plurality of retrieval processes may comprise retrieving data of a different modality. Different data modalities may, for example, comprise text data, image data, video data, audio data, times series, and/or data expressed as graphs. A first retrieval process may comprise retrieving data of a first modality. A second retrieval process may comprise retrieving data of a second (different) modality.

A data retrieval process of the plurality of retrieval processes may comprise using a language model, such as an LLM (which may be pre-trained). As described above, language models are typically trained on large training datasets and thus they have knowledge of data included in the training dataset. This knowledge is stored in the form of stored parameters of the trained language model. Prompting a pre-trained language model therefore comprises a form of data retrieval process.

Determining a plurality of retrievals which can be made using the retrieval process may comprise determining the plurality of retrievals based on the retrieval process, to which the retrieval relates. For example, the plurality of retrievals may comprise a plurality of prompts to which a response can be generated using the retrieval process. In such examples, determining the plurality of retrievals (which may comprise prompts) may comprise prompting a language model (such as an LLM). Determining the plurality of retrievals may comprise providing information related to the retrieval process to the language model, for example, in a prompt to the language model to generate a query (prompt) which can be answered using the retrieval process. The generated prompt may form a retrieval which can be made using the retrieval process.

As was described above, one or more of the retrieval processes of the plurality of retrieval processes may comprise retrieving data from a data category. For such retrieval processes, determining the plurality of retrievals may comprise generating prompts based on data stored in the data category. For example, for each of a plurality of data entries stored in a data category, a prompt may be generated based on the data entry, each prompt forming a data retrieval which can be made using the retrieval process. Different data entries, may comprise different files and/or documents and/or may comprise different portions of a file and/or document. A prompt may be generated based on a data entry by prompting a language model (such as an LLM) based on the data entry. The language model may, for example, be prompted to generate a query (prompt) which can be answered based on the data entry. The language model may be prompted by providing the data entry, or at least an indication of the contents of the data entry, to the language model as part of prompting the language model.

Additionally or alternatively, the plurality of retrievals which can be made using a retrieval process may comprise a plurality of data entries, answers and/or insights which can be retrieved using the retrieval process. For example, where a retrieval process comprises retrieving data from a data category, the plurality of retrievals may comprise different data entries stored in the data category.

Determining a plurality of retrievals which can be made using a retrieval process may comprise generating prompts based on a predetermined prompt for that retrieval process. For example, a predetermined (e.g., human generated) prompt may be used to generate one or more other prompts having a similar meaning to the predetermined prompt. For example, a language model may be prompted to generate one or more prompts having a similar meaning to a predetermined prompt. In such instances the prompts may form retrievals which can be made using the retrieval process.

The determined plurality of retrievals may comprise prompts (e.g., natural language prompts) for which a response can be generated using the respective retrieval process. Additionally or alternatively, the determined plurality of retrievals may comprise data entries, answers and/or insights which can be retrieved using the retrieval process.

Generating embeddings representative of each of the plurality of retrievals comprises, for each of the plurality of retrievals, generating an embedding representative of that retrieval. An embedding representative of a retrieval is a mathematical representation of that retrieval. An embedding may, for example, comprise a vector representation of a retrieval. A vector representation may capture the context and meaning of all or part of a retrieval. Embeddings representative of retrievals may be generated using any suitable embedding generation model. For example, embeddings representative of retrievals may be generated using an embedding generation model comprising an artificial neural network (ANN).

Storing the embeddings representative of the plurality of retrievals and the retrieval process as entries in the training dataset may comprise storing the embeddings and the retrieval process in memory such that each embedding is associated with a corresponding retrieval process for which the retrieval (which the embedding represents) was determined. The training dataset will therefore comprise a plurality of retrieval processes and for each retrieval process a plurality of embeddings representative of retrievals determined for that retrieval process.

In a training dataset comprising embeddings representative of retrievals and retrieval processes for which the retrievals were determined, the embeddings (representative of retrievals) may be considered as inputs (which may be represented by a numerical tensor X) and the retrieval processes may be considered as annotations or labels (which may be represented as a categorical vector Y) for each input (embedding). The embeddings (inputs X) and retrieval processes (annotations or labels Y) then form a training dataset for training of a retrieval process classifier. The trained retrieval process classifier may then be operable to determine a retrieval process Y for a given input embedding X.

The plurality of retrievals which can be made using a retrieval process may comprise prompts for which a response can be generated using the retrieval process.

The determining a plurality of retrievals which can be made using the retrieval process may comprise generating a plurality of prompts for which a response can be generated using the retrieval process.

The generating embeddings representative of each of the plurality of retrievals may comprise generating embeddings representative of the generated plurality of prompts.

A first retrieval process of the plurality of retrieval processes may comprise retrieving data from a data store storing a plurality of data entries. For the first retrieval process the generating a plurality of retrievals may comprise: for each of a plurality of data entries, generating a prompt for which a response can be generated using the data entry. The data store storing a plurality of data entries from which data is retrieved using the first retrieval process may comprise a first data category.

The generating a plurality of retrievals may comprise: for each of the plurality of data entries, prompting a language model to generate a prompt for which a response can be generated using the data entry.

The plurality of retrievals which can be made using a retrieval process may comprise data entries which can be retrieved using the retrieval process.

The determining a plurality of retrievals which can be made using a retrieval process may comprise determining data entries which can be retrieved using the retrieval process.

The generating embeddings representative of each of the plurality of retrievals may comprise generating embeddings representative of the determined plurality of data entries.

For at least one of the retrieval processes of the plurality of retrieval processes, the generating a plurality of retrievals may comprise receiving a first retrieval which can be made using the at least one of the retrieval processes and generating at least a second retrieval comprising a different phrasing of the first retrieval.

A second retrieval process of the plurality of retrieval processes may comprise prompting a language model and wherein for the second retrieval process the generating a plurality of retrievals comprises retrieving a plurality of retrievals for which a response can be generated using the language model.

According to a second aspect of the disclosure there is provided a computer implemented method of training a classifier for determining a retrieval process from amongst a plurality of retrieval processes, the method comprising: receiving a training dataset comprising a plurality of entries, each entry in the training dataset comprising an embedding representative of a retrieval and an indication of a retrieval process of the plurality of retrieval processes which can be used to retrieve the retrieval; and training a classifier based on the received training dataset, the classifier being trained to determine for an embedding representative of an input prompt, a retrieval process of the plurality of retrieval processes to use to generate a response to the input prompt.

The classifier may comprise any suitable machine learning classifier such as an artificial neural network, a support vector machine, a K-nearest neighbours model, a decision tree, a logistic regression classifier, a naive Bayes classifier, a classifier based on linear discriminant analysis and/or a classifier based on quadratic discriminant analysis.

The classifier is trained based on the training dataset. Training the classifier may, for example, comprise determining parameters of the classifier which map each of the embeddings of retrievals in the training dataset onto the respective retrieval process with a minimal cost. The cost may be representative of a difference between the retrieval processes output by the classifier for the embeddings in the training dataset and the retrieval processes in the training dataset which are associated with the respective embeddings in the training dataset. Training the classifier to minimise this cost may comprise finding parameters of the classifier which minimise the cost (and thus which most closely match the training dataset).

The received training dataset may comprise a training dataset generated according to a method according to the first aspect.

The training a classifier may comprise supervised learning of the classifier based on the training dataset.

The training a classifier may comprise: clustering the embeddings included in the training dataset into a plurality of clusters; and labelling the plurality of clusters with at least one indication of a retrieval process of the plurality of retrieval processes based on the indications of a retrieval process associated, in the training dataset, with embeddings in the clusters.

The trained classifier may be configured to: determine for an embedding representative of an input prompt: a first cluster having a smallest distance in an embedding space from the embedding representative of the input prompt; and determine the retrieval process of the plurality of retrieval processes to use to generate a response to the prompt as a retrieval process with which the first cluster is labelled.

The method may comprise: determining a subset of the plurality of retrieval processes; determining a subset of the training dataset, wherein the subset of the training dataset comprises entries in the training dataset which relate to the determined subset of the plurality of retrieval processes; and training the classifier based on the determined subset of the training dataset.

Training the classifier may comprise training the classifier to determine for an embedding representative of an input prompt, a plurality of retrieval processes of the plurality of retrieval processes to use to generate a response to the prompt.

According to a third aspect of the disclosure there is provided a computer implemented method of training a classifier for determining a retrieval process from amongst a plurality of retrieval processes comprising: generating a training dataset for training a classifier according to a method according to the first aspect; and training a classifier for determining a retrieval process from amongst a plurality of retrieval processes according to a method of according to the second aspect and using the generated training dataset as the received training dataset.

According to a fourth aspect of the disclosure there is provided a computer implemented method of generating a response to a prompt, the method comprising: receiving an input prompt; generating an embedding representative of the input prompt; providing the embedding representative of the input prompt to a classifier configured through training to determine for an embedding representative of an input prompt, a retrieval process from a plurality of retrieval processes to use to generate a response to the input prompt; receiving a determined retrieval process output by the classifier in response to providing the embedding representative of the input prompt to the classifier; and generating a response to the input prompt using the determined retrieval process and the input prompt.

The input prompt may comprise a natural language prompt. Generating the embedding representative of the prompt may comprise generating a mathematical representation (such as a vector representation) of the prompt.

The generating a response to the input prompt using the determined retrieval process may comprise a Retrieval Augmented Generation (RAG) process. A RAG process may comprise using the retrieval process output by the classifier to retrieve information and/or data which is relevant to the input prompt. For example, where the retrieval process output by the classifier comprises retrieving data from a data store, the retrieval process may comprise searching the data store for information and/or data in the data store which is relevant to the input prompt. In at least some examples, embeddings of data entries in the data store may be generated and/or stored in the data store. The embeddings of data entries in the data store may be searched for one or more embeddings which are closest (in an embedding space) to the generated embedding representative of the input prompt. The one or more closest embeddings (and/or the data entries which the embeddings represent) may be returned as the retrieved information and/or data. The retrieved information and/or data may be provided to a language model (e.g., LLM) along with the input prompt. Additionally or alternatively, a prompt to the language model may be generated based on the received input prompt and the retrieved data. In this way the language model can use the retrieved information and/or data to generate a response to the input prompt.

By using a trained classifier to determine a retrieval process, amongst a plurality of retrieval processes, a specific retrieval process which is suitable to the input prompt is determined. This allows the method to efficiently access at least one of a plurality of different retrieval processes when generating a response to an input prompt, such that a range of different and complex retrieval processes can be efficiently incorporated into and accessed by the same method.

The classifier may comprise a classifier trained according to a method according to the second and/or third aspects.

The generating a response to the input prompt may comprise: retrieving data using the determined retrieval process and based on the embedding representative of the input prompt and/or the input prompt; and providing the retrieved data to a language model and prompting the language model to generate a response to the input prompt using the retrieved data.

At least one of the retrieval processes may comprise retrieving data from a data store storing a plurality of data entries.

The plurality of data entries may comprise embeddings representative of stored data.

The determined retrieval process may comprise retrieving data from a data store storing a plurality of data entries and wherein the retrieving data comprises determining at least one data entry from the plurality of data entries to use to generate a response to the prompt and retrieving the determined at least one data entry as the retrieved data.

The input prompt may be associated with a permissions profile indicative of a subset of a plurality of retrieval processes for which permission is granted for the input prompt.

The method may comprise determining a first classifier of a plurality of classifiers, wherein the first classifier is trained based on the subset of the plurality of retrieval processes indicated by the permissions profile associated with the input prompt. Providing the embedding representative of the input prompt to a classifier may comprise providing the embedding representative of the input prompt to the determined first classifier.

The classifier may be configured through training to determine for an embedding representative of an input prompt, a plurality of retrieval processes to use to generate a response to the prompt. The receiving a determined retrieval process output by the classifier in response to providing the embedding representative of the input prompt to the classifier may comprise receiving a determined plurality of retrieval processes. The method may comprise selecting a retrieval process from the determined plurality of retrieval processes in dependence on the permissions profile associated with the input prompt. The generating a response to the input prompt may comprise generating the response using the selected retrieval process and the input prompt.

According to a fifth aspect of the disclosure there is provided a computing apparatus comprising: one or more processors; and memory comprising instructions which when executed by one or more of the processors cause the computing apparatus to be operable to perform a method according to any of the first, second, third of fourth aspects.

According to a sixth aspect of the disclosure there is provided a computer readable medium carrying instructions which when executed by one or more processors of a computing apparatus, cause the computing apparatus to be operable to carry out a method according to any of the first, second, third of fourth aspects

It will be appreciated from the foregoing disclosure and the following detailed description of the examples that certain features and implementations described as being optional in relation to any given aspect of the disclosure set out above should be understood by the reader as being disclosed also in combination with the other aspects of the present disclosure, where applicable. Similarly, it will be appreciated that any attendant advantages described in relation to any given aspect of the disclosure set out above should be understood by the reader as being disclosed as advantages of the other aspects of the present disclosure, where applicable. That is, the description of optional features and advantages in relation to a specific aspect of the disclosure above is not limiting, and it should be understood that the disclosures of these optional features and advantages are intended to relate to all aspects of the disclosure in combination, where such combination is applicable.

The following numbered clauses provide further example implementations.
1. A computer implemented method of generating a training dataset for training a classifier for determining a retrieval process from amongst a plurality of retrieval processes, the method comprising:
   for each of the plurality of retrieval processes:
   determining a plurality of retrievals which can be made using the retrieval process;
   generating embeddings representative of each of the plurality of retrievals; and
   storing the embeddings representative of the plurality of retrievals and the retrieval process as entries in the training dataset.
2. The computer implemented method of clause 1, wherein the plurality of retrievals which can be made using a retrieval process comprise prompts for which a response can be generated using the retrieval process.
3. The computer implemented method of clause 2, wherein the determining a plurality of retrievals which can be made using the retrieval process comprises generating a plurality of prompts for which a response can be generated using the retrieval process.
4. The computer implemented method of clause 3, wherein the generating embeddings representative of each of the plurality of retrievals comprises generating embeddings representative of the generated plurality of prompts.
5. The computer implemented method of any one of clauses 2 to 4, wherein a first retrieval process of the plurality of retrieval processes comprises retrieving data from a data store storing a plurality of data entries and for the first retrieval process the generating a plurality of retrievals comprises: for each of a plurality of data entries, generating a prompt for which a response can be generated using the data entry.
6. The computer implemented method of clause 5, wherein the generating a plurality of retrievals comprises: for each of the plurality of data entries, prompting a language model to generate a prompt for which a response can be generated using the data entry.
7. The computer implemented method of any one of clauses 1 to 6, wherein the plurality of retrievals which can be made using a retrieval process comprise data entries which can be retrieved using the retrieval process.
8. The computer implemented method of clause 7, wherein the determining a plurality of retrievals which can be made using a retrieval process comprises determining data entries which can be retrieved using the retrieval process.
9. The computer implemented method of clause 8, wherein the generating embeddings representative of each of the plurality of retrievals comprises generating embeddings representative of the determined plurality of data entries.
10. The computer implemented method of any one of clauses 1 to 9, wherein for at least one of the retrieval processes of the plurality of retrieval processes, the generating a plurality of retrievals comprises receiving a first retrieval which can be made using the at least one of the retrieval processes and generating at least a second retrieval comprising a different phrasing of the first retrieval.
11. The computer implemented method of any one of clauses 1 to 10, wherein a second retrieval process of the plurality of retrieval processes comprises prompting a language model and wherein for the second retrieval process the generating a plurality of retrievals comprises retrieving a plurality of retrievals for which a response can be generated using the language model.
12. A computer implemented method of training a classifier for determining a retrieval process from amongst a plurality of retrieval processes, the method comprising:
   receiving a training dataset comprising a plurality of entries, each entry in the training dataset comprising an embedding representative of a retrieval and an indication of a retrieval process of the plurality of retrieval processes which can be used to retrieve the retrieval; and
   training a classifier based on the received training dataset, the classifier being trained to determine for an embedding representative of an input prompt, a retrieval process of the plurality of retrieval processes to use to generate a response to the input prompt.
13. The computer implemented method of clause 12, wherein the received training dataset comprises a training dataset generated according to a method of any one of clauses 1 to 11.
14. The computer implemented method of clause 12 or 13, wherein the training a classifier comprises supervised learning of the classifier based on the training dataset.
15. The computer implemented method of any one of clauses 12 to 14, wherein the training a classifier comprises:
   clustering the embeddings included in the training dataset into a plurality of clusters; and
   labelling the plurality of clusters with at least one indication of a retrieval process of the plurality of retrieval processes based on the indications of a retrieval process associated, in the training dataset, with embeddings in the clusters.
16. The computer implemented method of clause 15, wherein the trained classifier is configured to:
   determine for an embedding representative of an input prompt: a first cluster having a smallest distance in an embedding space from the embedding representative of the input prompt; and
   determine the retrieval process of the plurality of retrieval processes to use to generate a response to the prompt as a retrieval process with which the first cluster is labelled.
17. The computer implemented method of any one of clauses 12 to 16, wherein the method comprises:
   determining a subset of the plurality of retrieval processes;
   determining a subset of the training dataset, wherein the subset of the training dataset comprises entries in the training dataset which relate to the determined subset of the plurality of retrieval processes; and
   training the classifier based on the determined subset of the training dataset.
18. The computer implemented method of any one of clauses 12 to 17, wherein training the classifier comprises training the classifier to determine for an embedding representative of an input prompt, a plurality of retrieval processes of the plurality of retrieval processes to use to generate a response to the prompt.
19. A computer implemented method of training a classifier for determining a retrieval process from amongst a plurality of retrieval processes comprising:
   generating a training dataset for training a classifier according to a method of any one of clauses 1 to 11; and
   training a classifier for determining a retrieval process from amongst a plurality of retrieval processes according to a method of any one of clauses 12 to 17 and using the generated training dataset as the received training dataset.
20. A computer implemented method of generating a response to a prompt, the method comprising:
   receiving an input prompt;
   generating an embedding representative of the input prompt;
   providing the embedding representative of the input prompt to a classifier configured through training to determine for an embedding representative of an input prompt, a retrieval process from a plurality of retrieval processes to use to generate a response to the input prompt;
   receiving a determined retrieval process output by the classifier in response to providing the embedding representative of the input prompt to the classifier; and
   generating a response to the input prompt using the determined retrieval process and the input prompt.
21. The computer implemented method of clause 20, wherein the classifier comprises a classifier trained according to a method of any one of clauses 12 to 19.
22. The computer implemented method of clause 20 or 21, wherein the generating a response to the input prompt comprises:
   retrieving data using the determined retrieval process and based on the embedding representative of the input prompt and/or the input prompt; and
   providing the retrieved data to a language model and prompting the language model to generate a response to the input prompt using the retrieved data.
23. The computer implemented method of any one of clauses 20 to 22, wherein at least one of the retrieval processes comprises retrieving data from a data store storing a plurality of data entries.
24. The computer implemented method of clause 23, wherein the plurality of data entries comprise embeddings representative of stored data.
25. The computer implemented method of clause 23 or clause 24, wherein the determined retrieval process comprises retrieving data from a data store storing a plurality of data entries and wherein the retrieving data comprises determining at least one data entry from the plurality of data entries to use to generate a response to the prompt and retrieving the determined at least one data entry as the retrieved data.
26. The computer implemented method of any one of clauses 20 to 25, wherein the input prompt is associated with a permissions profile indicative of a subset of a plurality of retrieval processes for which permission is granted for the input prompt.
27. The computer implemented method of clause 26, wherein the method comprises determining a first classifier of a plurality of classifiers, wherein the first classifier is trained based on the subset of the plurality of retrieval processes indicated by the permissions profile associated with the input prompt, and
   wherein providing the embedding representative of the input prompt to a classifier comprises providing the embedding representative of the input prompt to the determined first classifier.
28. The computer implemented method of clause 26 or 27, wherein the classifier is configured through training to determine for an embedding representative of an input prompt, a plurality of retrieval processes to use to generate a response to the prompt,
   wherein the receiving a determined retrieval process output by the classifier in response to providing the embedding representative of the input prompt to the classifier comprises receiving a determined plurality of retrieval processes, and
   wherein the method comprises selecting a retrieval process from the determined plurality of retrieval processes in dependence on the permissions profile associated with the input prompt, and
   wherein the generating a response to the input prompt comprises generating the response using the selected retrieval process and the input prompt.
29. Computing apparatus comprising:
   one or more processors; and
   memory comprising instructions which when executed by one or more of the processors cause the computing apparatus to be operable to perform a method according to any one of clauses 1 to 28.
30. A computer readable medium carrying instructions which when executed by one or more processors of a computing apparatus, cause the computing apparatus to be operable to carry out a method according to any one of clauses 1 to 28.

### BRIEF DESCRIPTION OF THE DRAWINGS

Certain examples of the present disclosure will now be described, with reference to the accompanying drawings, in which:
- FIG. 1 is a schematic illustration of the flow of a typical Retrieval Augmented Generation process;
- FIG. 2 is a schematic illustration of a data structure comprising a plurality of data categories;
- FIG. 3 is a schematic illustration of the flow of a Retrieval Augmented Generation process according to examples disclosed herein;
- FIG. 4 is a flowchart of a method of generating a response to a prompt according to examples disclosed herein;
- FIG. 5 is flowchart of a method of generating a training dataset for training a classifier according to examples disclosed herein;
- FIG. 6 is schematic illustration of a flow of an example process of generating prompts based on the data entries in a data category according to examples disclosed herein;
- FIG. 7 is a flowchart of a method of training a classifier for determining a retrieval process from amongst a plurality of retrieval processes according to examples disclosed herein; and
- FIG. 8 is a schematic illustration of an example electronic device according to examples disclosed herein.

### DETAILED DESCRIPTION

Hereinafter, examples of the disclosure are described with reference to the accompanying drawings. However, it should be appreciated that the disclosure is not limited to the described examples, and all changes and/or equivalents or replacements thereto also belong to the scope of the disclosure. The same or similar reference denotations may be used to refer to the same or similar elements throughout the specification and the drawings.

As used herein, the terms "have," "may have," "include," or "may include" a feature (e.g., a number, function, operation, or a component such as a part) indicate the existence of the feature and do not exclude the existence of other features. Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

As used herein, the terms "A or B," "at least one of A and/or B," or "one or more of A and/or B" may include all possible combinations of A and B. For example, "A or B," "at least one of A and B," "at least one of A or B" may indicate all of (1) including at least one A, (2) including at least one B, or (3) including at least one A and at least one B.

As used herein, the terms "first" and "second" may modify various components regardless of importance and do not limit the components. These terms are only used to distinguish one component from another. For example, reference to a first component and a second component may indicate different components from each other regardless of the order or importance of the components.

It will be understood that when an element (e.g., a first element) is referred to as being (physically, operatively or communicatively) "coupled with/to," or "connected with/to" another element (e.g., a second element), it can be coupled or connected with/to the other element directly or via a third element. In contrast, it will be understood that when an element (e.g., a first element) is referred to as being "directly coupled with/to" or "directly connected with/to" another element (e.g., a second element), no other element (e.g., a third element) intervenes between the element and the other element.

The terms as used herein are provided merely to describe some embodiments thereof, but not to limit the scope of other embodiments of the disclosure. It is to be understood that the singular forms "a," "'an," and "the" include plural references unless the context clearly dictates otherwise. All terms including technical and scientific terms used herein have the same meaning as commonly understood by one of ordinary skill in the art to which the embodiments of the disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

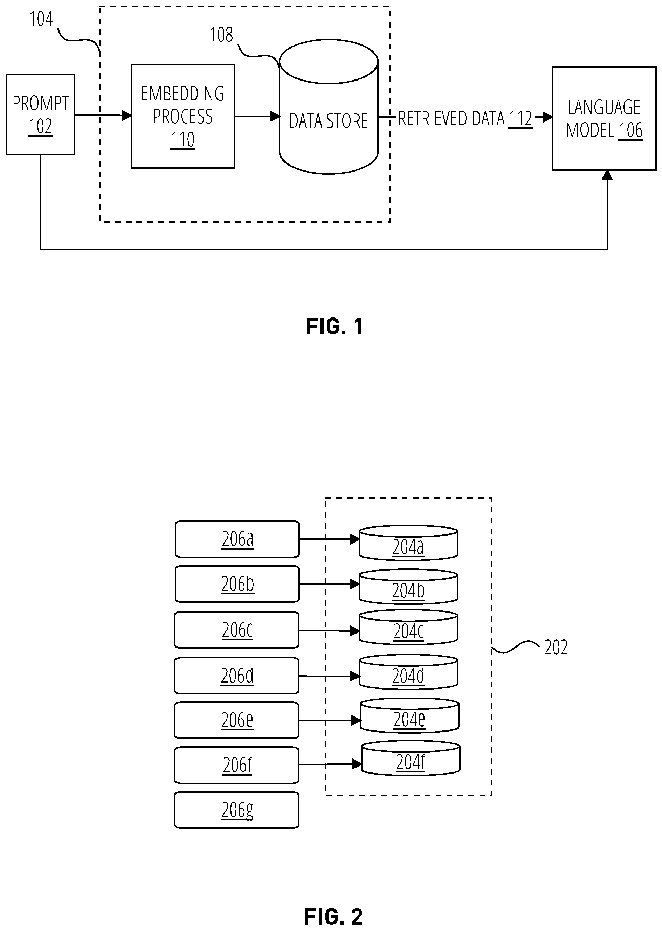

FIG. 1 is a schematic illustration of the flow of a typical Retrieval Augmented Generation (RAG) process. The process begins with a prompt 102. The prompt 102 may comprise natural language text and may be formulated by a user in the form of a question, query or demand. In some examples, a prompt 102 may include a system prompt and a user prompt. A system prompt may provide context, instructions and/or guidelines for use in responding to the user prompt. The user prompt may comprise a prompt generated and input by a user. Additionally or alternatively, a user prompt may be generated by another system (such as another language model) utilising the RAG process.

In the absence of a RAG process, the prompt 102 may be provided to a language model 106, which may comprise a Large Language Model (LLM), in isolation. In such a scenario, the language model 106 model will generate a response to the prompt 102 based on its parameters learnt through training. The knowledge which a language model 106 is able to draw upon to generate a response to the prompt 102 is limited to the contents of the training dataset on which it was trained (this knowledge being baked into the parameters of the trained language model).

In a RAG process, the prompt 102 is augmented with additional data retrieved during a data retrieval 104. The data retrieval 104 may include searching a data store 108 for data which is relevant to the prompt 102. For example, the prompt 102 may first be processed through an embedding process 110 to generate an embedding representative of the prompt 102. An embedding is a numerical representation of an object such as text, image, audio etc. An embedding typically comprises a vector, whose numerical components are representative of the meaning and/or content of the object for which the embedding is generated. For example, embeddings representative of objects having similar semantic meaning may comprise vectors which are close to each other (e.g., having a relatively small Euclidean distance and/or cosine similarity between them) in an embeddings space. For example, a first prompt and a second prompt which have a similar semantic meaning but which are phrased differently may result in a first embedding and a second embedding which are close to each other in the embeddings space.

An embedding representative of the prompt 102 may be used to search the data store 108 for data contained within the data store 108 which is relevant to the prompt 102. Such a search may be facilitated by embeddings representative of data entries in the data store 108. For example, embeddings may be generated (e.g., in advance of a RAG process) for each of a plurality of data entries stored in the data store 108 to generate a plurality of embeddings, where each embedding is representative of a data entry in the data store 108. The plurality of embeddings may form a searchable index which can be searched for embeddings which are close to the embedding representative of the prompt 102. For example, one or more embeddings representative of data entries in the data store 108 may be identified which are close to the embedding representative of the prompt 102. The identified data entries may then be provided as an output of the data retrieval 104 in the form of retrieved data 112.

The retrieved data 112 is provided to the language model 106 along with the prompt 102 such that the language model 106 can generate a response to the prompt 102 using the retrieved data 112. Such a RAG process can provide a language model 106 with access to an up-to-date and/or domain specific knowledge base (as encapsulated by the data store 108), thereby allowing the language model 106 to generate responses based on up to date and/or specific information. A RAG process can also provide a convenient and user friendly way to access data from a data store 108. For example, the data store 108 can be interrogated using natural language prompts 102 to which natural language responses may be generated based on the contents of the data store 108.

A RAG process such as that described above with reference to FIG. 1 may have particular utility where there is a single data store 108 from which data entries can be retrieved for all prompts 102. However, such a RAG process may suffer from difficulties when used to retrieve data from a more complex data structure and/or using a more complex data retrieval process. For example, in some implementations it may be desirable to use a RAG process to retrieve data from one or more of a plurality of different data categories, using a plurality of different retrieval methods and/or to retrieve data from a data category which has access permissions associated with it.

FIG. 2 is a schematic illustration of a data structure 202 comprising a plurality of data categories 204a - 204g. The data structure 202 may be stored using any suitable hardware. For example, different data categories may be stored on physically separate hardware, such as in different physical data stores and/or memory devices. Additionally or alternatively, different data categories may be stored on the same hardware such as the same physical data store and/or memory device. Additionally or alternatively, different portions of a data category may be stored over a plurality of different hardware devices. For example, one of more of the data categories 204a - 204g may include data stored in different data stores and/or using different memory devices. References herein to data categories is not intended to suggest any limitation as to the hardware used to store data. Different data categories are instead intended to refer to logical groupings of data. Different data categories 204a - 204g may for example relate to different data types, topics or origins, data stored using different data storage techniques, data which uses different data access techniques to retrieve the data, data having different access permissions associated with it and/or data having different modalities.

In a purely illustrative example, the data structure 202 may comprise all of the data stored by an organisation. Different data categories 204a - 204g stored in the data structure 202 may store different types of data. For example, a first data category 204a may include data generated by an IT department and may, for example, include user instructions on accessing and using systems provided by the IT department, such as how to login into a laptop provided by the IT department. A second data category 204b may include data generated by an HR department such as instructions for accessing an HR management system which allows employees to book annual leave.

Using a standard RAG process (such as a process as described with reference to FIG. 1) the data in both the first data category 204a and the second data category 204b may be included in a data store 108 to which a RAG process is provided access. However, including data from different categories in data to which a RAG process has access without discrimination, may result in retrieval errors. For example, a user may provide a prompt 102 asking for help with logging in to their laptop. Such a prompt 102 may result in a retrieval of information from the second data category 204b providing instructions for logging into the HR management system. Such instructions include information related to logging in to a system and may therefore be retrieved as being semantically similar to a prompt 102 related to logging in to a laptop. However, the retrieved information may not be relevant to the user's prompt 102 and the generated response which is returned to the user may not be helpful to them.

Additionally or alternatively, different data categories 204a - 204g may include data which is stored in different ways and/or is accessed in different ways. For example, a third data category 204c may include data stored in a structured database. In order to retrieve data from the third data category 204c a Structured Query Language (SQL) query may be generated and used to locate and retrieve relevant data from the third data category 204c. A fourth data category 204d may include unstructured data such as text documents. In order to retrieve data from the fourth data category 204d a search of the contents of the text documents may be performed in order to identify relevant documents and/or relevant sections of the documents. Methods of searching and retrieving data from the third data category 204c and the fourth data category 204d may therefore be different and different retrieval processes may be required to access data from the third data category 204c and the fourth data category 204d. A standard RAG process (such as a process as described with reference to FIG. 1) may not be able to handle retrieving data using different access methods.

Additionally or alternatively, different data categories 204a - 204g may have different access permissions associated with them. For example, a fifth data category 204e may include data which all user's of an organisation have permission to access. For example, the fifth data category 204e may include data relating to internal news of an organisation which all user's can access. A sixth data category 204f may include data to which only a subset of user's have permissions to access. For example, the sixth data category 204f may include data relating to employee's salaries to which only user's belonging to an HR and/or management team have permission to access. A standard RAG process (such as a process as described with reference to FIG. 1) may not be able to differentiate between different data having different access permissions to ensure that a response to a prompt 102 is only based on data to which a user providing the prompt 102 has permission to access.

Retrieving data from different data categories may be performed using a plurality of different retrieval processes 206a - 206f. For example, as schematically illustrated in FIG. 2, data may be retrieved from the first data category 204a using a first retrieval process 206a, data may be retrieved from the second data category 204b using a second retrieval process 206b, data may be retrieved from the third data category 204c using a third retrieval process 206c, data may be retrieved from the fourth data category 204d using a fourth retrieval process 206d, data may be retrieved from fifth data category 204e using a fifth retrieval process 206e and data may be retrieved from the sixth data category 204f using a sixth retrieval process 206f. Each retrieval process 206a - 206f may include determining data in an associated data category 204a -204f which is relevant to a given input prompt 102 and retrieving the determined data. A retrieval process 206a - 206f may further include formatting the retrieved data into a form which is suitable for providing to a language model 106 to allow the language model 106 to augment its response to the given input prompt 102 with the formatted data. In some examples, a retrieval process 206a - 206f may include decrypting data where data is encrypted.

Different data retrieval processes 206a - 206f may comprise retrieving data of different types. For example, as was described above, the first data category 204a and the second data category 204b may comprise data of different types (e.g., relating to different subject matter) and as such the first retrieval process 206a and the second retrieval process 206b may comprise retrieving data of different types.

Additionally or alternatively, different retrieval processes 206a - 206f may comprise retrieving data using different access methods. For example, as was described above, the third data category 204c and the fourth data category 204d may comprise data stored in different ways and which is retrieved using different data access methods. Accordingly, the third retrieval process 206c and the fourth retrieval process 206d may comprise retrieving data using different data access methods such as generating and providing an SQL query and searching the contents of text documents to identify relevant documents and/or relevant sections of the documents.

Additionally or alternatively, different retrieval processes 206a - 206f may comprise retrieving data using different access permissions. For example, as was described above, the fifth data category 204e and the sixth data category 204f may comprise data having different access permissions associated with them. Accordingly, the fifth retrieval process 206e and the sixth retrieval process 206f may comprise retrieving data having different access permissions and/or using different access permissions. For example, retrieving data having access permissions associated with it (e.g., using the fifth retrieval process 206e and using the sixth retrieval process 206f) may comprise providing security credentials and/or other source of proof of sufficient access permissions in order to access the data.

In addition to the data categories 204a - 204f which may be accessed, there may also be some prompts 102 for which no relevant data is included in the data structure 202. A response to such prompts 102 may be generated using a language model 106 (such as an LLM) alone and may not be augmented using data retrieved from a data structure 202. For example, a seventh retrieval process 206g may comprise using a language model 106 without augmentation with data retrieved from the data structure 202. Whilst such a retrieval process 206g does not include retrieval of data from the data structure 202 it may still be referred to as a retrieval process 206g. For example, a language model 106 is typically trained on a large training dataset and patterns included in that training dataset are learnt by the language model 106 and represented by parameters of the trained language model 106. Use of a language model 106 alone may therefore be considered to be a form of retrieval of information learnt by the language model 106.

Whilst purely illustrative examples of different data categories 204a - 204f and retrieval processes 206a - 206g have been described above, it will be appreciated that the methods and apparatus described herein are not limited to use with the types of data categories 204a - 204f or retrieval processes 206a - 206g described. In general, a data structure 202 may include any number of different data categories which may, for example, include data of different types, data stored in different ways and/or accessed in different ways, data having different access permissions and/or any combination of these.

Additionally or alternatively, data of different modalities may be stored in any data category 204a - 204f. For example, one or more of the data categories 204a - 204f may include data stored as text, images, tables, time series, audio, video, graphs and/or any other modality of data. Any of the data categories 204a - 204f may include unstructured data and/or structured data. Furthermore, any number of different retrieval processes may be used to retrieve data from a data structure. Different retrieval processes may include retrieving data of different types, from different sources and/or domains, using different access methods, using different access permissions and/or any combination of these.

It may be desirable to provide a RAG process which can retrieve data from one or more different data categories 204a - 204f, such as the data categories described herein and/or using different retrieval processes 206a - 206g whilst handling the complexities associated with disparate data categories and/or retrieval processes.

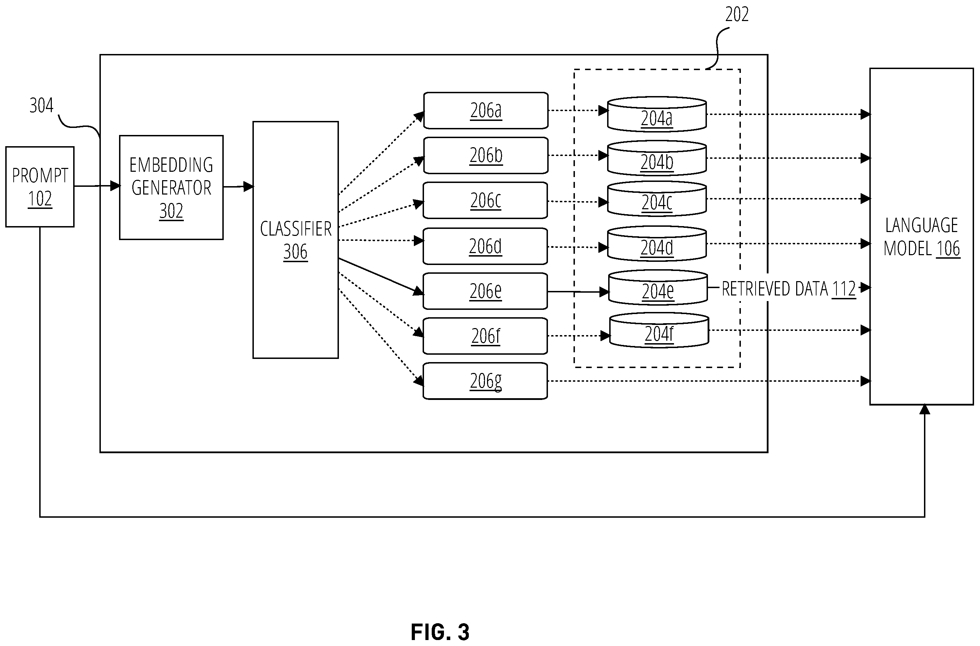

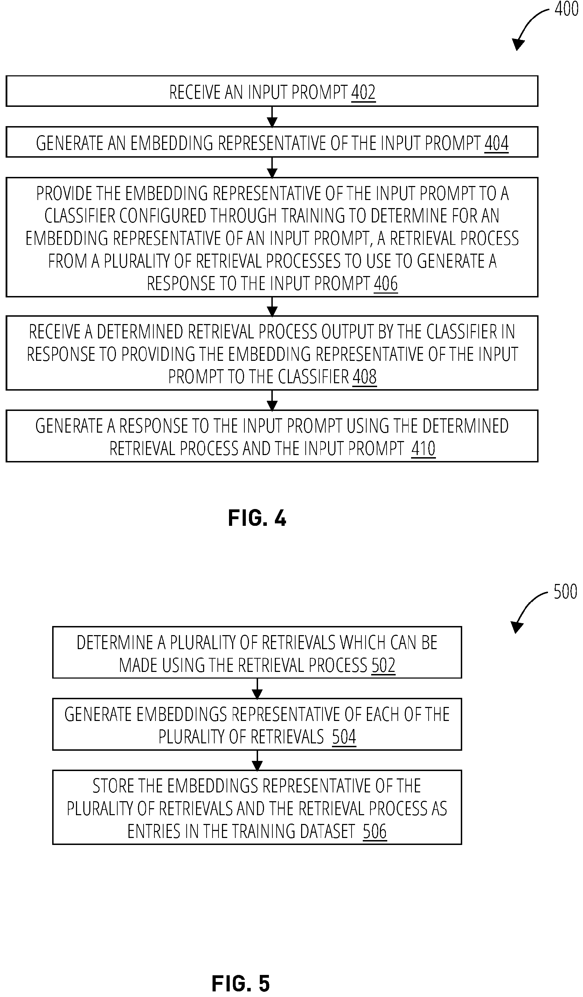

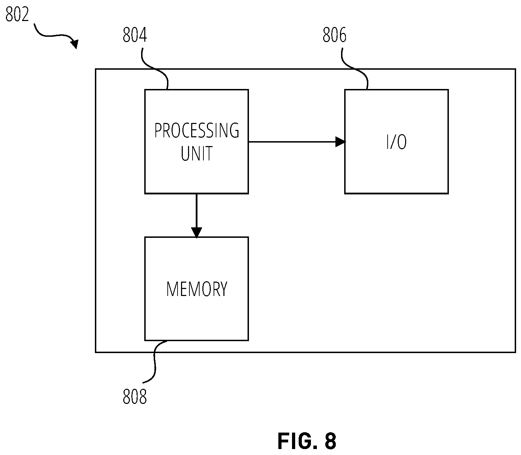

FIG. 3 is a schematic illustration of the flow of a RAG process according to examples disclosed herein. FIG. 4 is a flowchart of a method 400 of generating a response to a prompt according to examples disclosed herein. The method 400 of FIG. 4 may utilise the flow of the RAG process schematically shown in FIG. 3 and as such FIG. 3 and FIG. 4 will be described together. The methods described with reference to FIG. 3 and FIG. 4 may be implemented using any suitable computing device and/or combination of computing devices. For example, all or part of the methods described with reference to FIG. 3 and FIG. 4 may be implemented using one or more electronic devices of the form described below with reference to FIG. 8.

In the example shown in FIG. 3, the RAG process can access data from any of the first to sixth data categories 204a - 204f and use any of the first to seventh retrieval processes 206a - 206g, which were described above with reference to FIG. 2. No further detailed description of the data categories 204a - 204f or retrieval processes 206a - 206g will be provided again with reference to FIG. 3. The RAG process of FIG. 3 is not limited to the data categories 204a - 204f or retrieval processes 206a - 206g described and shown and is more widely applicable to any number and type of data categories and retrieval processes.

Similarly to the RAG process of FIG. 1, the RAG process of FIG. 3 begins with an input prompt 102. At step 402 of FIG. 4 an input prompt is received, which may be the same input prompt 102 shown in FIG. 3. The input prompt 102 may comprise natural language text and may be formulated by a user in the form of a question, query or demand. In some examples, an input prompt 102 may include a system prompt and a user prompt. A system prompt may provide context, instructions and/or guidelines for use in responding to the user prompt. The user prompt may comprise a prompt generated and input by a user. Additionally or alternatively, a user prompt may be generated by another system (such as another language model) utilising the RAG process.

The RAG process of FIG. 3 includes a data retrieval 304 which differs from the data retrieval 104 of FIG. 1. At step 404 of the method 400 of FIG. 4 an embedding representative of the input prompt 102 is generated. As shown in FIG. 3 The input prompt 102 may be provided to an embedding generator 302 configured to generate an embedding representative of the input prompt 102. As was explained above, an embedding comprises a numerical representation of an object (in this case the input prompt 102). A generated embedding representative of an input prompt 102 typically comprises a vector, whose numerical components are representative of the meaning and/or content of the input prompt 102. The embedding generator 302 may comprise any suitable embedding model.

At step 406 of the method 400 of FIG. 4 a generated embedding representative of the input prompt 102 is provided to a classifier 306 (as also shown in FIG. 3). The classifier is configured through training to determine for the embedding representative of the input prompt 102, a retrieval process from the plurality of retrieval processes 206a - 206g to use to generate a response to the input prompt 102. The training and configuration of the classifier 306 will be described in more detail below.

At step 408 of the method 400 of FIG. 4 a determined retrieval process output by the classifier 306 in response to providing the embedding representative of the input prompt 102 is received. In some examples, the classifier 306 may determine a single retrieval process from the plurality of retrieval processes 206a - 206g to use to generate a response to the input prompt 102. For example, in FIG. 3 the arrow representing the flow from the classifier 306 to the fifth retrieval process 206e is shown as a solid line (in comparison to the dotted lines representing the flow from the classifier 306 to the other retrieval processes) to indicate an example in which the classifier determines, based on the embedding of the input prompt 102, to use the fifth retrieval process 206e from the plurality of retrieval processes 206a - 206g to generate a response to the input prompt 102.

At step 410 of the method 400 of FIG. 4 a response to the input prompt 102 is generated using the determined retrieval process and the input prompt 102. For example, in the example depicted in FIG. 4 in which the fifth retrieval process 206e is determined by the classifier 306, the fifth retrieval process 206e is used to retrieve data (e.g., from the fifth data category 204e) which is relevant to the input prompt 102. The fifth retrieval process 206e produces retrieved data 112 which is provided to the language model 106 along with the input prompt 102 to generate a response to the input prompt 102 using the retrieved data 112 and the input prompt 102.

The generating a response to the input prompt 102 at step 410, may comprise retrieving data using the determined retrieval process and based on the embedding representative of the input prompt and/or the input prompt itself. For example, the determined retrieval process 206a - 206g may comprise retrieving data from a data store, where retrieving data from a data store may comprise retrieving data, which is stored in a data store, and which belongs to a particular data category 204a - 204g with which the retrieval process is associated. In such examples, either or both of the embedding representative of the input prompt 102 and the input prompt 102 itself may be used to retrieve data from the data store/data category.

Stored data (e.g., data stored in a data store) in a given data category 204a - 204g may be considered to comprise a plurality of data entries. For example, where a data category 204a - 204g comprises structured data such as data stored in a structured database, each data entry may correspond with a particular entry and/or field in the structured data. Where a data category 204a - 204g comprises unstructured data such as a plurality of documents (e.g., text documents, images, etc.) each data entry may comprise all of or a portion of a given document in the data category. For example, a data category comprising a plurality of text documents may be considered to comprise a plurality of data entries where each data entry comprises all of or part of a text document.

The retrieving data using a retrieval process 206a - 206g may comprise determining at least one data entry from a plurality of data entries to use to generate a response to the input prompt 102 and retrieving the determined at least one data entry as the retrieved data 112. In some examples, embeddings representative of each of a plurality of stored data entries in a data category may be generated and/or stored (e.g., generated and stored in advance of the data retrieval 304). For example, embeddings representative of each of a plurality of data entries in a data category 204a - 204f comprising unstructured data may generated and/or stored. Each embedding may, for example, be representative of the contents of all of or a portion of a document included in the data category.

Where embeddings representative of data entries in a data category are available, retrieving data using a retrieval process 206a - 206g may comprise using the embedding representative of the input prompt 102 to determine at least one data entry from the data category. For example, one or more embeddings representative of data entries in the data category may be found which are relatively close (e.g., having a relatively small Euclidean distance and/or cosine similarity between them) in an embedding space to the embedding representative of the input prompt 102. One or more data entries may then be retrieved which correspond to such one or more embeddings which are close in an embedding space to the embedding representative of the input prompt 102. The one or more data entries may form the retrieved data 112 which is provided to the language model 106 along with the input prompt 102.

Where a retrieval process 206a - 206g comprises retrieving structured data (e.g., retrieving data from a structured database) retrieving data from stored data in a data category may comprise generating a structured data query (e.g., an SQL) for retrieving data to use to generate a response to the input prompt 102. In such examples, the input prompt 102 itself may be used to generate a structured data query for retrieving data relevant to the input prompt 102 and which might be useful for generating a response to the input prompt 102. One or more data entries from the structured data may be returned in response to the generated query. The one or more returned data entries may form the retrieved data 112 which is provided to the language model 106 along with the input prompt 102.

In some examples, data retrieved using a retrieval process may be formatted and/or interpreted in order to provide it to the language model 106. For example, data retrieved using a retrieval process may have a modality other than natural language text such as an image, video, audio, table, graph etc. In such examples, the retrieved data may be formatted and/or interpreted into a format such as natural language text. For example, a written description of the contents of an image may be generated and provided to the language model 106. Formatting and/or interpretation of data may be performed by the language model 106 itself or by a separate model (e.g., a model configured to interpret the contents of data such as images). In some examples, the contents of data retrieved using a retrieval process may be summarised and/or rephrased before providing it to the language model 106.

It will be appreciated that the details of how a determined retrieval process retrieves data 112 to provide to the language model 106 will depend on the specific nature of the retrieval process which is determined from the plurality of retrieval processes 206a - 206g.

The language model 106 may be any suitable model for processing and generating natural language. For example, the language model 106 may comprise an LLM. The language model 106 may comprise a Generative Pre-trained Transformer (GPT). The language model 106 may comprise at least one Artificial Neural Network (ANN).

As was described above with reference to FIG. 3 and the method 400 of FIG. 4 a classifier 306 may be used to determine, for a given input prompt 102, a retrieval process (from a plurality of retrieval processes 206a - 206g) to use to generate a response to the input prompt 102. In this way the classifier 306 may function as a switch to determine a retrieval process to use and from thereon the retrieval process is performed using the determined retrieval process. In this way the retrieval process which is best suited to the input prompt 102 can be used in order to provide retrieved data 112 which is most relevant for providing a response to the input prompt 102 and the relevance and/or usefulness of a generated response may be improved. Furthermore, the data retrieval 304 may enable data retrieval from one or more disparate data sources (e.g., data categories) which may have different access methods and/or modalities.

In addition to these advantages, a trained classifier 306 may be used to control access to one or more data categories based on access permissions associated with one or more data categories. In some examples, this may be achieved by training a classifier 306 for given access permissions. For example, a first group of users (which may include only a single user or a plurality of users) may have access permissions to access data using a first subset of all of the plurality of retrieval processes 206a - 206g. A second group of users (which may include only a single user or a plurality of users) may have access permissions to access data using a second subset of all of the plurality of retrieval processes, where the second subset is different to the first subset. In such a scenario, a first classifier may be trained using a training dataset including entries associated with the first subset of the retrieval processes only and a second classifier may be trained using a training dataset including entries associated with the second subset of the retrieval processes only. The first classifier will therefore only return a retrieval process which the first group of users has access permissions to access and the second classifier will only return a retrieval process which the second group of users has access permissions to access.

During implementation in a data retrieval 304 the first classifier may then be used for input prompts 102 provided by the first group of users and the second classifier may be used for input prompts prompt 102 provided by the second group of users. A response to an input prompt 102 will then only be based on data which a user has sufficient access permissions to access and data leakage to users without sufficient access permissions will be avoided.

Additionally or alternatively, a classifier 306 may be trained to determine a plurality of retrieval processes which may be used to generate a response to the input prompt 102. For example, a plurality of retrieval processes may be ranked in order of their suitability for use to generate a response to the input prompt 102. A retrieval process from the plurality of retrieval processes output by the classifier 306 may be selected, which a user providing the input prompt 102 has sufficient access permissions to access. For example, a highest ranked retrieval process output by the classifier, for which the user providing the input prompt 102 has sufficient access permissions to access, may be selected and used. This may allow a single classifier to be used for users having different access permissions whilst still avoiding data leakage to users without sufficient access permissions.

A classifier 306 may be trained based on a training dataset. Such a training dataset may comprise prompts 102 for which a response can be generated, and labels for each prompt in the form of a retrieval process which can be used to generate a response to the prompt. The classifier 306 may then be trained to map the prompts in the training dataset to the retrieval processes with which the prompts are labelled. The trained classifier 306 may then receive a new input prompt for which no retrieval process label is available and determine a retrieval process to use based on its parameters determined through training.

A suitable training dataset could be generated by one or more users selecting a retrieval process with which to label a plurality of different prompts. For example, a system with a user interface could be provided in which a user can enter an input prompt and then select a retrieval process (e.g., from a menu of all available retrieval processes 206a - 206f) to use in order to generate a response to the prompt 102. Each input prompt and user selected retrieval process may then be collected and stored as an entry in a training dataset. After a period of use of the system by one or more users, sufficient training data may be collected in order to train a classifier 306. However such an approach of manual user labelling of prompts 102 may be time and user resource intensive since accurate training of a classifier may require a large number of labelled prompts (e.g. hundreds, thousands or even tens of thousands) for each retrieval process.

In order to overcome such limitations and to provide an improved accuracy of training of a classifier, methods are disclosed herein for generating a training dataset for training a classifier 306 based on the retrievals which can be made using the available retrieval processes 206a - 206f. In some examples, a training dataset for training a classifier 306 may be generated based on data included in data categories 204a - 204f which can be retrieved using the available retrieval processes 206a - 206f.

FIG. 5 is flowchart of a method 500 of generating a training dataset for training a classifier 306 according to examples disclosed herein. The methods described with reference to FIG. 5 may be implemented using any suitable computing device and/or combination of computing devices. For example, all or part of the methods described with reference to FIG. 5 may be implemented using one or more electronic devices of the form described below with reference to FIG. 8

The steps 502, 504, 506 of the method 500 may be performed for each of a plurality of retrieval processes 206a - 206g. For example, the method 500 may be performed for a first retrieval process 206a to generate a plurality of entries in a training dataset for the first retrieval process 206a (and which are labelled with the first retrieval process 206a). The method 500 may be further performed for a second retrieval process 206b to generate a plurality of entries in the training dataset for the second retrieval process 206b (and which are labelled with the second retrieval process 206b). Furthermore, the method 500 may be performed for each of the third retrieval process 206c to the seventh retrieval process 206g to generate a plurality of entries in the training dataset for each of the retrieval processes (which may include any number of different retrieval processes). However, in some examples, the method 500 may only be performed for a subset of all available retrieval processes.

At step 502 a plurality of retrievals which can be made using the retrieval process (for which the method 500 of FIG. 5 is being performed) are determined. The plurality of retrievals may comprise prompts 102 for which a response can be generated using the retrieval process. For example, the plurality of retrievals may comprise a plurality of natural language prompts for which a response can be generated using the retrieval process. In such examples, determining the plurality of retrievals may comprise generating a plurality of prompts for which a response can be generated using the retrieval process. Prompts may be generated using a language model (e.g., an LLM). For example, a language model may be prompted to generate a query which can be answered using the retrieval process.

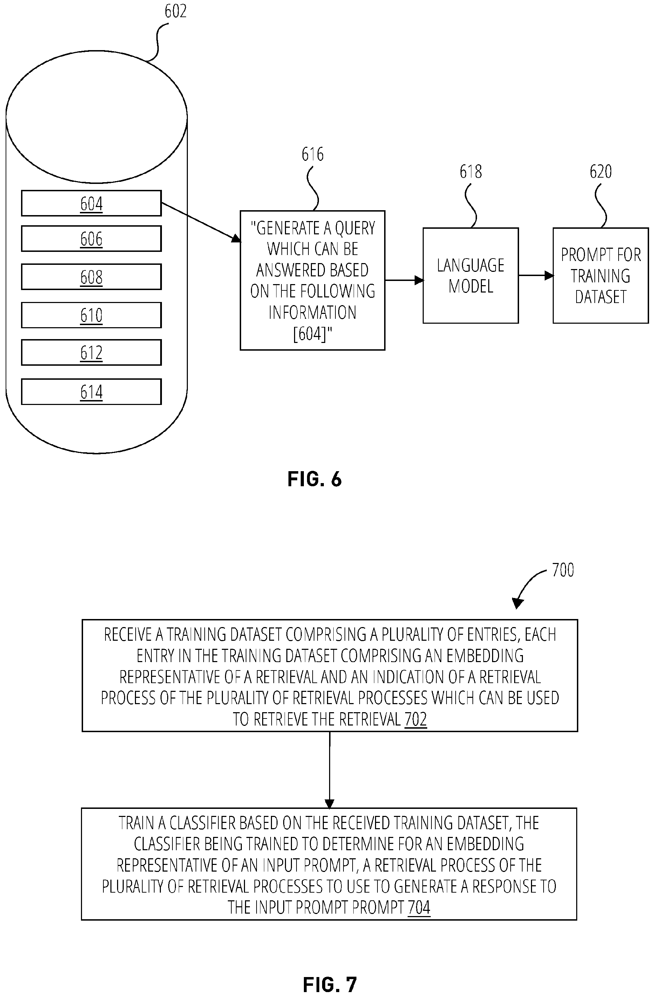

Where a retrieval process comprises retrieving data entries from a data store (e.g, retrieving data from one or more data stores which belong to a particular data category), prompts may be generated based on the data entries which can be retrieved using the retrieval process. FIG. 6 is schematic illustration of a flow of an example process of generating prompts based on the data entries in a data category. In the example shown in FIG. 6 a data category 602 is shown as comprising a plurality of data entries 604 - 614. The data category 602 may be any suitable data category as described above with reference to FIG. 2 and FIG. 3. For example, the data category 602 may have any of the features of any of the data categories 204a - 204f described above with reference to FIG. 2 and FIG. 3. The data category may be stored in one or more data stores and as such a retrieval process for retrieving data from the data category 602 may comprise retrieving data from a data store.

Each data entry 604 - 614 in the data category 602 may be used to prompt a language model 618 to generate a query which can be answered based on a data entry. For example, as shown in FIG. 6 a prompt 616 may be generated for a first data entry 604. Merely to provide an example, the prompt 616 may comprise a natural language prompt of the form "generate a query which can be answered based on the following information [604]", where [604] comprises the contents of the first data entry 604. For example, each of the data entries 604 - 614 may comprise a name and job role of an employee in an organisation. The data entries 604 - 614 may be stored as unstructured data (e.g., in one or more text documents) or as structured data (e.g., entries in a structured database). In a purely illustrative example, the first data entry may indicate that an employee named "John Smith" has a job role of "Manager". In such an example, the prompt 616 may comprise a natural language prompt of the form "generate a query which can be answered based on the following information: an employee named John Smith has a job role of manager". When provided with this prompt 616, the language model 618 might generate a response such as "What is the job role of John Smith?" or "Name an employee with the job role of manager?" Such a response output by the language model can form a prompt 620 which can be used to generate an entry in a training dataset.

In some examples, a plurality of prompts 620 may be generated for a data entry 604. For example, the language model 618 may be prompted to generate a plurality of queries which can be answered based on a data entry 604. The language model 618 may then output a plurality of responses which can be used to generate an entry in the training dataset. In this way a plurality of entries in the training dataset may be generated for a data entry 604.

A corresponding process may be performed for each of a plurality of data entries 604 - 614 to generate one or more prompts corresponding to each data entry 604 - 614.

The generation of prompts 620 for which a response can be generated using a retrieval process may be relatively straightforward for a retrieval process which comprises retrieving data entries, particularly where those data entries comprise natural language text. For example, for data entries which comprise all or part of a text document, prompts 620 may be generated for each entry using a corresponding process to that described above with reference to FIG. 6. For data entries which comprise other data modalities such as images, a model capable of interpreting the contents of the data entries could be used. For example, a model capable of interpreting the contents of an image may be provided with an image and prompted to generate a natural language summary of the contents of the image. The natural language summary may then be provided to a language model 618 in a corresponding manner to that described above with reference to FIG. 6.

Corresponding processes could be used for other data modalities as appropriate. For a retrieval process which comprises retrieving data entries from structured data (such as a structured database), structured data queries may be generated for retrieving data entries from the structured data. The retrieved data entries may then be used to generate prompts 620 for which a response can be generated using the data entries in a corresponding way to that which was described with reference to FIG. 6.

For one or more retrieval processes, prompts may not be generated based on data entries in a data category. For example, one or more retrieval processes may not be associated with documents and/or data entries. For such retrieval processes one or more user generated prompts may be collected and/or obtained. In such examples, further prompts having a similar meaning may be generated using a language model. For example, a prompt may be provided to a language model and the language model may be prompted to rephrase the prompt and/or generate one or more prompts having a similar semantic meaning. Such a process may be used to increase a number of entries in a training dataset without requiring the collection of further user generated prompts.

As was explained above, one or more retrieval processes (e.g., the seventh retrieval process 206g described above with reference to FIG. 2 and FIG. 3) may comprise the use of a language model 106 without augmentation with retrieved data 112. For such a retrieval process a plurality of retrievals which can be made using the retrieval process may be determined by retrieving a plurality of retrievals (e.g., in the form of prompts) for which a response can be generated using the language model 106. For example, a dataset (which may comprise a publicly available dataset) of natural language questions may be retrieved. Such a dataset could be supplemented for example by prompting a language model to rephrase the questions and/or generate questions having a similar semantic meaning to the retrieved questions.

Several examples have been described above in which a determined plurality of retrievals which can be made using a retrieval process comprises prompts for which a response can be generated using the retrieval process. However, in some examples a plurality of retrievals may be expressed in a form other than prompts. For example, where a retrieval process comprises retrieving data entries (e.g., from a data category 602) the plurality of retrievals may comprise the plurality of data entries (e.g., data entries 604 - 614) themselves. In general, the plurality of retrievals may be expressed in any form which is indicative of data which can be retrieved using retrieval process and/or indicative of queries to which a response can be generated using the retrieval process.

Returning again to the method 500 of FIG. 5, at step 504 embeddings representative of each of the plurality of retrievals (the retrievals determined at step 502) are generated. The embeddings may be generated by providing the plurality of retrievals to any suitable embeddings model. As was described above, a retrieval of the plurality of retrievals may comprise a prompt 620. For such a retrieval, an embedding representative of the prompt 620 is generated. Additionally or alternatively, a retrieval of the plurality of retrievals may comprise a data entry 604 - 614. For such a retrieval an embedding representative of the data entry 604 - 614 is generated.

Generating the embeddings at step 504 serves to generate a numerical representation of the retrievals which can be processed by a machine learning algorithm to train a classifier 306.

At step 506 the embeddings representative of the plurality of retrievals (generated at step 504) and the retrieval process to which each retrieval relates are stored as entries in a training dataset. The retrieval process to which each retrieval relates serves as a label or annotation for each embedding representative of a retrieval. Each entry in the training dataset may comprise at least an embedding representative of a retrieval and an indication of a retrieval process (of a plurality of retrievals processes) which can be used to retrieve the retrieval. In such a training dataset the embeddings (representative of retrievals) may be considered as inputs (which may be represented by a numerical tensor X) and the retrieval processes may be considered as annotations or labels (which may be represented as a categorical vector Y) for each input (embedding). The embeddings (inputs X) and retrieval processes (annotations or labels Y) then form a training dataset for training of a retrieval process classifier 306. The trained retrieval process classifier may then be operable to determine a retrieval process Y for a given input embedding X.

As was explained above, the steps 502, 504, 506 of the method 500 of FIG. 5 may be performed for each of a plurality of retrieval processes. A plurality of entries of the training dataset may be determined for each retrieval process and the training dataset entries determined for each retrieval process may be included in the same training dataset. The resulting training dataset may therefore comprise a plurality of embeddings which are labelled with each retrieval process.

FIG. 7 is a flowchart of a method 700 of training a classifier for determining a retrieval process from amongst a plurality of retrieval processes according to examples disclosed herein. The methods described with reference to FIG. 7 may be implemented using any suitable computing device and/or combination of computing devices. For example, all or part of the methods described with reference to FIG. 7 may be implemented using one or more electronic devices of the form described below with reference to FIG. 8

At step 702 a training dataset is received. The training dataset comprises a plurality of entries, where each entry in the training dataset comprises an embedding representative of a retrieval and and an indication of a retrieval process, of a plurality of retrievals processes, which can be used to retrieve the retrieval. The training dataset may be generated using a method 500 as described above with reference to FIG. 5 and FIG. 6. The training dataset which is received at step 702 may include any of the features described above.

At step 704 a classifier 306 is trained based on the training dataset which is received at step 702. The classifier 306 is trained to determine, for an embedding representative of an input prompt 102, a retrieval process of a plurality of retrieval processes to use to generate a response to the input prompt 102. That is, the trained classifier 306 may be configured to receive an input prompt 102 for which a retrieval process is yet to be determined and to determine a retrieval process (based on the input prompt) to use to generate a response to the input prompt.

The classifier 306 may take any suitable form. For example, the classifier 306 may comprise an Artificial Neural Network (ANN). The ANN may be configured to receive, at an input layer, an input indicative of an embedding representative of an input prompt 102 and output, at an output layer, an output indicative of at least one retrieval process (of a plurality of retrieval processes) to use to generate a response to the input prompt 102. In some examples, the output may be binary. For example, an output layer may include a value for each retrieval process which may take on binary values of either "1" (the retrieval process is determined for use to generate a response to the input prompt 102) or "0" (the retrieval process is not determined for use to generate a response to the input prompt 102). In such examples, a single output corresponding to a single retrieval process may have a generated output of "1" such that a single retrieval process is determined for use for a given input prompt 102. Alternatively, a plurality of retrieval processes (which form a subset of all of the retrieval processes) may be determined for use for a given input prompt 102. In some examples, the output layer may take on values from a range (e.g., a continuous range). Values in the output layer may, for example, correspond with a score or probability associated with each retrieval processes. For example, a relatively high score or probability in the output layer may indicate that the associated retrieval process is a good match for use in generating a response to the input prompt. A relatively low score or probability associated in the output layer may indicate that the associated retrieval process is a poor match for use in generating a response to the input prompt. Scores or probabilities associated with different retrieval processes may allow the retrieval processes to be ranked in order of their suitability for use in generating a response to the input prompt.

Training of the classifier 306 may comprise supervised learning of the classifier 306 using the training dataset. Training of the classifier 306 may comprise determining parameters of the classifier 306 which best map the embeddings in the training dataset to the retrieval processes with which each embedding is labelled in the training dataset. In other words, the training of the classifier 306 may comprise determining parameters of the classifier 306 which minimise a cost function, where the cost function represents a difference between outputs generated by the classifier 306 for the embeddings in the training dataset and the corresponding outputs (retrieval processes) in the training dataset. In examples, in which the classifier 306 comprises a ANN, the parameters of the classifier 306 which are determined through training may comprise weights and/or biases associated with nodes belonging to one or more hidden layers of the ANN.

Whilst an example has been described in the context of an ANN, in general the classifier 306 may comprise any suitable machine learning classifier such as a support vector machine, a K-nearest neighbours model, a decision tree, a logistic regression classifier, a naive Bayes classifier, a classifier based on linear discriminant analysis and/or a classifier based on quadratic discriminant analysis.

In some examples, training of the classifier 306 may comprise at least an element of unsupervised learning. For example, training of the classifier 306 may comprise clustering of embeddings in the training dataset into a plurality of clusters in the embeddings space (for example, this clustering step could be performed without reference to the retrieval processes in the training dataset). Each identified cluster of embeddings may then be labelled according to the retrieval processes with which the embeddings in the cluster are labelled in the training dataset. That is, each cluster may be labelled with at least one indication of a retrieval process (of the plurality of retrieval processes) based on the indications of a retrieval process with which embeddings in the cluster are associated (labelled) in the training dataset. For example, a first cluster may mostly or entirely include embeddings which are labelled with a first retrieval process in the training dataset and a second cluster may mostly or entirely include embeddings which are labelled with a second retrieval process in the training dataset. Accordingly the first cluster may be labelled with the first retrieval process and the second cluster may be labelled with the second retrieval process.

Such a labelled set of clusters of embeddings may be used as a classifier in an inference mode. For example, when provided with a new input prompt 102 (e.g., an input prompt 102 as described above with reference to FIG. 3 and step 402 of FIG. 4) an embedding of the input prompt 102 may be generated (as described with reference to step 404 of FIG. 4). The embedding of the input prompt 102 may be used to determine a first cluster of embeddings having a smallest distance (in the embeddings space) from the embedding of the input prompt 102. Any suitable measure of distance may be used such as a Euclidean distance and/or cosine similarity. A retrieval process to use to generate a response to the input prompt 102 may then be determined as a retrieval process with which the first cluster of embeddings (being closest to the embedding of the input prompt 102) is labelled.

As was explained above, in some examples a classifier 306 may be trained for a given set of access permissions. For example, a first group of users (which may comprise a single user or plurality of users) may have access permissions to access a first subset of the plurality of retrieval processes (which may not include all of the plurality of retrieval processes). The access permissions of the first group of users may be stored in a first permissions profile indicative of a subset of retrieval processes for which access permissions are granted for the first group of users. A first classifier 306 may be trained for the first group of users by determining the first subset of the plurality of retrieval processes and accordingly determining a first subset of the training dataset. The determined first subset of the training dataset comprises entries in the training dataset which relate to the determined first subset of the plurality of retrieval processes. For example, the first subset of the training dataset may be determined as comprising entries in the training dataset which are labelled with retrieval processes which belong to the first subset of retrieval processes. The first classifier may then be trained based on the first subset of retrieval processes.

Different classifiers may be trained based on different subsets of the training dataset. For example, a second group of users (which may comprise a single user or plurality of users) may have access permissions to access a second subset of the plurality of retrieval processes (which may not include all of the plurality of retrieval processes), which may be different to the first subset of the plurality of retrieval processes. The access permissions of the second group of users may be stored in a second permissions profile indicative of a subset of retrieval processes for which access permissions are granted for the second group of users. A second classifier 306 may be trained for the second group of users by determining the second subset of the plurality of retrieval processes and accordingly determining a second subset of the training dataset. As with the first subset, the determined second subset of the training dataset comprises entries in the training dataset which relate to the determined second subset of the plurality of retrieval processes. For example, the second subset of the training dataset may be determined as comprising entries in the training dataset which are labelled with retrieval processes which belong to the second subset of retrieval processes. The second classifier may then be trained based on the second subset of retrieval processes.

In this way a plurality of classifiers may be trained for a plurality of different user groups having different access permissions and permissions profiles. Since each classifier is trained only on a subset of the training dataset (where the subset relates to retrieval processes which the respective user group has access permissions to access) each classifier will only return retrieval processes which the respective user group (for which the classifier is trained) has access permissions to access. In inference mode, when a user inputs an input prompt 102, a classifier 306 which has been trained for a user group to which the user belongs (i.e., a user group having the same access permissions as the user) may be determined. The input prompt 102 may be associated with a permissions profile of the user providing the input prompt 102 and a classifier is determined which was trained on a subset of the training dataset indicated by the permissions profile with which the input prompt 102 is associated. For example, for an input prompt 102 provided by a first user belonging to the first user group, the first classifier described above is determined. For an input prompt 102 provided by a second user belonging to the second user group, the second classifier is determined. An embedding representative of the input prompt 102 may then be provided to the determined classifier such that the classifier determines a retrieval process which the user providing the input prompt has sufficient access permissions to access.

As was explained above with reference to FIG. 3 access permissions may additionally or alternatively be managed by training a classifier to return a plurality of potential retrieval processes which may be used to generate a response to an input prompt. For example, a classifier may be trained to output a score or probability associated with several retrieval processes, where the score or probability is indicative of the suitability of the retrieval process for use in generating a response to an input prompt 102. In inference mode, a retrieval process from the determined plurality of potential retrieval processes may be selected in dependence on a permissions profile associated with an input prompt 102. As was explained above, a permissions profile may be indicative of a subset of retrieval processes for which access permissions are granted for the input prompt 102. A retrieval process may be selected from a plurality of returned retrieval processes, where the selected retrieval process is indicated in the permissions profile as having access permissions granted for the input prompt 102. For example, the plurality of retrieval processes returned by a classifier may be ranked based on their associated score or probability (determined for the input prompt). A highest ranked retrieval process for which access permissions are granted for the input prompt 102 may then be selected for use in generating a response to the input prompt 102.

Various methods, features and implementations have been described herein in which some of the steps may be implemented by any suitable electronic device (such as a computing device) and/or combination of electronic devices (e.g. computing devices). Furthermore devices, modules, functions and components have been described herein which may be realised using a suitable electronic device (such as a computing device) and/or combination of electronic devices (e.g. computing devices). FIG. 8 is a schematic illustration of an example electronic device 802 which may be used to implement all or part of any method, feature or implementation described herein and/or to realise all or part of any device, module, function and/or component described herein. For example, all or part of any of the methods 400, method 500, and/or method 700 may be implemented one ore more electronic devices 802 of the type shown in FIG. 8. The electronic device 802 may comprise a computing device.

The electronic device 802 may include at least one processing unit 804, memory 808 and an input/output interface 806 (I/O). The processing unit 804 may include any suitable processor and/or combination of processors. For example, the processing unit 804 may include one or more of a Central Processing Unit (CPU) and a Graphical Processing Unit (GPU). The memory 808 may include volatile memory and/or non-volatile/persistent memory. The memory 808 may, for example, be used to store data such as an operating system, instructions to be executed by the processing unit (e.g. in the form of software to be executed by the processing unit), configuration information related to the electronic device 802. In some examples, the memory 808 may be used to store instructions for executing any of the methods and/or steps disclosed herein.

At least the processing unit 804 is connected to the input/output interface 806. The input/output interface 806 may facilitate communication with one or more other devices. For example, the input/output interface 806 may be operable to transmit and/or receive communications to/from other devices in a network. The input/output interface 806 may, for example, comprise one or more antennas to facilitate wireless communication with one or more other devices. Additionally, or alternatively, the input/output interface 806 may comprise a wired interface for establishing a wired connection with one or more other devices. Additionally or alternatively, the input/output interface 806 may comprise means for realising a user interface or and/or user interface itself. For example, the input/output interface 806 may comprise a keyboard and/or a user interface for providing keyboard like functionality (such as a touch sensitive display on which an image of a keyboard is displayed) for receiving written input of a user. For example, a keyboard and/or user interface may facilitate receiving an input prompt 102 from a user as described herein.

Optionally, the electronic device 802 may further include a display (not shown). The display may comprise any suitable electronic display such as a touch sensitive display. The display may be connected to at least to the processing unit 804. The processing unit 804 may generate display signals which are sent to the display in order to cause the display information. An electronic display may be user, for example,to display a response returned by a language model as described herein.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. In particular, any dependent claims may be combined with any of the independent claims and any of the other dependent claims.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A computer implemented method of generating a training dataset for training a classifier for determining a retrieval process from amongst a plurality of retrieval processes, the method comprising:
for each of the plurality of retrieval processes:
determining a plurality of retrievals which can be made using the retrieval process;
generating embeddings representative of each of the plurality of retrievals; and
storing the embeddings representative of the plurality of retrievals and the retrieval process as entries in the training dataset.

2. The computer implemented method of claim 1, wherein the plurality of retrievals which can be made using a retrieval process comprise prompts for which a response can be generated using the retrieval process and/or data entries which can be retrieved using the retrieval process.

3. The computer implemented method of claim 2, wherein the determining a plurality of retrievals which can be made using the retrieval process comprises generating a plurality of prompts for which a response can be generated using the retrieval process and/or determining data entries which can be retrieved using the retrieval process.

4. The computer implemented method of claim 2 or 3, wherein a first retrieval process of the plurality of retrieval processes comprises retrieving data from a data store storing a plurality of data entries and for the first retrieval process the generating a plurality of retrievals comprises: for each of a plurality of data entries, generating a prompt for which a response can be generated using the data entry.

5. The computer implemented method of claim 4, wherein the generating a plurality of retrievals comprises: for each of the plurality of data entries, prompting a language model to generate a prompt for which a response can be generated using the data entry.

6. The computer implemented method of any one of claims 1 to 5, wherein for at least one of the retrieval processes of the plurality of retrieval processes, the generating a plurality of retrievals comprises receiving a first retrieval which can be made using the at least one of the retrieval processes and generating at least a second retrieval comprising a different phrasing of the first retrieval.

7. A computer implemented method of training a classifier for determining a retrieval process from amongst a plurality of retrieval processes, the method comprising:
receiving a training dataset comprising a plurality of entries, each entry in the training dataset comprising an embedding representative of a retrieval and an indication of a retrieval process of the plurality of retrieval processes which can be used to retrieve the retrieval; and
training a classifier based on the received training dataset, the classifier being trained to determine for an embedding representative of an input prompt, a retrieval process of the plurality of retrieval processes to use to generate a response to the input prompt.

8. The computer implemented method of claim 7, wherein the training a classifier comprises:
clustering the embeddings included in the training dataset into a plurality of clusters; and
labelling the plurality of clusters with at least one indication of a retrieval process of the plurality of retrieval processes based on the indications of a retrieval process associated, in the training dataset, with embeddings in the clusters.

9. The computer implemented method of claim 8, wherein the trained classifier is configured to:
determine for an embedding representative of an input prompt: a first cluster having a smallest distance in an embedding space from the embedding representative of the input prompt; and
determine the retrieval process of the plurality of retrieval processes to use to generate a response to the prompt as a retrieval process with which the first cluster is labelled.

10. A computer implemented method of training a classifier for determining a retrieval process from amongst a plurality of retrieval processes comprising:
generating a training dataset for training a classifier according to a method of any one of claims 1 to 6; and
training a classifier for determining a retrieval process from amongst a plurality of retrieval processes according to a method of any one of claims 7 to 9 and using the generated training dataset as the received training dataset.

11. A computer implemented method of generating a response to a prompt, the method comprising:
receiving an input prompt;
generating an embedding representative of the input prompt;
providing the embedding representative of the input prompt to a classifier configured through training to determine for an embedding representative of an input prompt, a retrieval process from a plurality of retrieval processes to use to generate a response to the input prompt;
receiving a determined retrieval process output by the classifier in response to providing the embedding representative of the input prompt to the classifier; and
generating a response to the input prompt using the determined retrieval process and the input prompt.

12. The computer implemented method of claim 11, wherein the generating a response to the input prompt comprises:
retrieving data using the determined retrieval process and based on the embedding representative of the input prompt and/or the input prompt; and
providing the retrieved data to a language model and prompting the language model to generate a response to the input prompt using the retrieved data.

13. The computer implemented method of claim 11 or 12, wherein at least one of the retrieval processes comprises retrieving data from a data store storing a plurality of data entries, wherein the plurality of data entries comprise embeddings representative of stored data.

14. The computer implemented method of any one of claims 11 to 13, wherein the input prompt is associated with a permissions profile indicative of a subset of a plurality of retrieval processes for which permission is granted for the input prompt.

15. The computer implemented method of claim 14, wherein the classifier is configured through training to determine for an embedding representative of an input prompt, a plurality of retrieval processes to use to generate a response to the prompt,
wherein the receiving a determined retrieval process output by the classifier in response to providing the embedding representative of the input prompt to the classifier comprises receiving a determined plurality of retrieval processes, and
wherein the method comprises selecting a retrieval process from the determined plurality of retrieval processes in dependence on the permissions profile associated with the input prompt, and
wherein the generating a response to the input prompt comprises generating the response using the selected retrieval process and the input prompt.
